# EUROPEAN PATENT SPECIFICATION

(11) **EP 1 398 480 B1**
(45) Date of publication and mention of the grant of the patent: **06.06.2012**
(21) Application number: 03018840.3
(22) Date of filing: 19.08.2003
(51) Int. Cl.: F02D 41/10, F02M 69/04, F02D 41/34

(54) **Fuel injection control system for internal combustion engine**
Kraftstoffeinspritzsteuereinrichtung für eine Brennkraftmaschine
Système de commande d'injection de carburant pour un moteur à combustion interne

(30) Priority: 11.09.2002 JP 2002265660
(43) Date of publication of application: 17.03.2004
(73) Proprietor: HONDA GIKEN KOGYO KABUSHIKI KAISHA, Minato-ku, Tokyo (JP)
(72) Inventor: Watanabe, Tsuguo, Wako-shi, Saitama, (JP); Hayashi, Tatsuo, Wako-shi, Saitama, (JP); Machida, Kenichi, Wako-shi, Saitama, (JP); Yuhara, Tomomi, Wako-shi, Saitama, (JP)
(74) Representative: Liska, Horst

(56) References cited:
- EP-A- 1 260 695
- US-A- 4 612 904
- PATENT ABSTRACTS OF JAPAN vol. 014, no. 217 (M-0970), 8 May 1990 (1990-05-08) -& JP 02 049940 A (JAPAN ELECTRON CONTROL SYST CO LTD), 20 February 1990 (1990-02-20)
- PATENT ABSTRACTS OF JAPAN vol. 016, no. 519 (M-1330), 26 October 1992 (1992-10-26) & JP 04 191446 A (MAZDA MOTOR CORP), 9 July 1992 (1992-07-09)
- PATENT ABSTRACTS OF JAPAN vol. 008, no. 262 (M-341), 30 November 1984 (1984-11-30) & JP 59 134363 A (NIPPON JIDOSHA BUHIN SOGO KENKYUSHO KK), 2 August 1984 (1984-08-02)
- PATENT ABSTRACTS OF JAPAN vol. 1998, no. 12, 31 October 1998 (1998-10-31) & JP 10 196440 A (HONDA MOTOR CO LTD), 28 July 1998 (1998-07-28)
- PATENT ABSTRACTS OF JAPAN vol. 016, no. 498 (M-1325), 15 October 1992 (1992-10-15) & JP 04 183949 A (MAZDA MOTOR CORP), 30 June 1992 (1992-06-30)

## Description

The present invention relates to an internal combustion engine in which respective fuel inj ection valves on the upstream and downstream sides have been arranged with a throttle valve interposed therebetween.

When the fuel injection valve is provided upstream from the throttle valve, the volumetric efficiency is improved because heat is taken from intake air when injection fuel vaporizes. Therefore, the engine output can be increased as compared with when the fuel injection valve is provided downstream from the throttle valve.

When, however, the fuel injection valve is provided on the upstream side, a response lag occurs in fuel transport as compared with when the fuel injection valve is provided downstream from the throttle valve because distance between the fuel injection port and a combustion chamber inevitably becomes longer.

There has been disclosed in, for example, Japanese Patent Laid-Open Nos. 2-49940, 4-183949 and 10-196440, a fuel injection system in which fuel injection valves have been provided upstream from and downstream from the intake pipe respectively with the throttle valve interposed therebetween in order to improve the engine output and cope with the response lag.

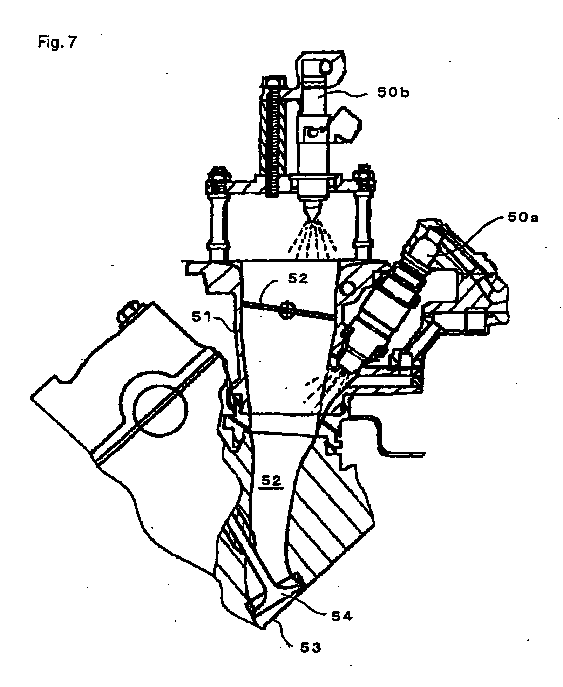

Fig. 7 is a cross-sectional view showing a major portion of a conventional internal combustion engine in which two fuel injection valves have been arranged, and with the throttle valve 52 of the intake pipe 51 interposed, there have been arranged a first fuel injection valve 50a on the downstream side and a second fuel injection valve 50b on the upstream side.

In an internal combustion engine equipped with such fuel injection valves, there has been known accelerated increase in quantity and correction in which an accelerated driving state is detected to increase and correct injection quantity of fuel. Since in such accelerated increase in quantity and correction, it is necessary to control an air-fuel ratio in such a manner that fuel does not lag behind an increase in intake air quantity during acceleration, it is requested to quickly increase the quantity of injection fuel. Accordingly, in an internal combustion engine equipped with two fuel injection valves, if this fuel for accelerated increase in quantity and correction is dispersed into both the upstream side and the downstream side, it will becomes difficult to obtain sufficient acceleration performance due to response lag which occurs on the injection quantity on the upstream side.

It is an object of the present invention to solve the problem of the conventional technique described above, and to provide a fuel injection control system excellent in response of the accelerated increase in quantity and correction in an international combustion engine in which fuel injection valves are arranged upstream from and downstream from the throttle valve respectively.

In order to achieve the above-described object, the present invention is characterized by an internal combustion engine according to claim 1.

According to the above-described feature, since fuel, the quantity of which has been increased by the accelerated increase in quantity and correction, is all injected from the downstream fuel injection valve, no response lag is caused in injection of the fuel for the accelerated increase in quantity and correction. Therefore, it is possible to improve the response in the accelerated increase in quantity and correction. Hereinafter, a preferred embodiment of the present invention will be described with reference to the accompanying drawings, in which:
Fig. 1 is a general block diagram showing a fuel injection system according to one embodiment of the present invention;
Fig. 2 is a functional block diagram for a fuel injection control unit 10;
Fig. 3 is a view showing one example of an injection rate table;
Fig. 4 is a flowchart showing a control procedure of fuel injection;
Fig. 5 is a view showing one example of a PB map;
Fig. 6 is a view showing one example of a TH map; and
Fig. 7 is a cross-sectional view showing a conventional internal combustion engine in which two fuel injection valves have been arranged.

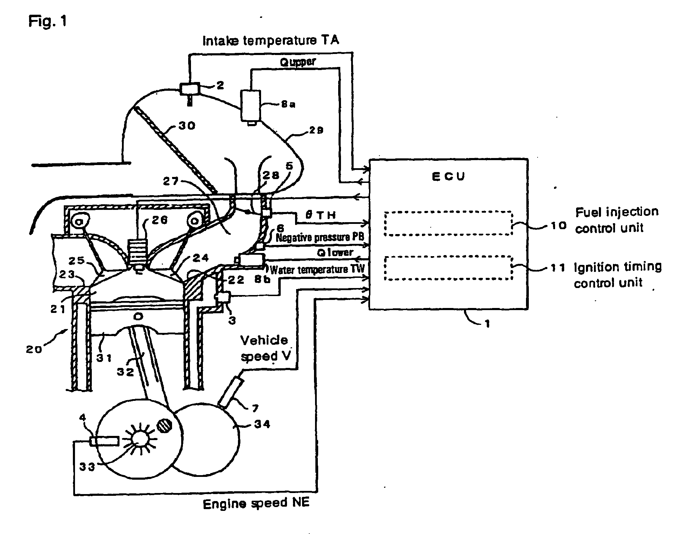

Hereinafter, with reference to the drawings, the description will be made of a preferred embodiment of the present invention in detail. Fig. 1 is a general block diagram showing a fuel inj action system according to one embodiment of the present invention, and on a combustion chamber 21 of the engine 20, there are opened an intake port 22 and an exhaust port 23. Each port 22 and 23 is provided with an intake valve 24 and an exhaust valve 25 respectively, and an ignition plug 26 is provided.

On an intake passage 27 leading to the intake port 22, there are provided a throttle valve 28 for adjusting intake air quantity in accordance with its opening θTH, a throttle sensor 5 for detecting the opening θTH and a vacuum sensor 6 for detecting intake manifold vacuum PB. At a terminal of the intake passage 27, there is provided an air cleaner 29. Within the air cleaner 29, there is provided an air filter 30, and open air is taken into the intake passage 27 through this air filter 30.

In the intake passage 27, there is arranged a downstream injection valve 8b downstream from the throttle valve 28, and on the air cleaner 29 upstream from the throttle valve 28, there is arranged an upstream injection valve 8a so as to point to the intake passage 27 , and there is provided an intake temperature sensor 2 for detecting intake (atmospheric) temperature TA.

Opposite to a crankshaft 33 coupled to a piston 31 of the engine 20 through a connecting rod 32, there is arranged an engine speed sensor 4 for detecting engine speed NE on the basis of a rotation angle of a crank. Further, opposite to a rotor 34 such as a gear which is coupled to the crankshaft 33 for rotation, there is arranged a vehicle speed sensor 7 for detecting vehicle speed V. On a water jacket formed around the engine 20, there is provided a water temperature sensor 3 for detecting cooling water temperature TW representing the engine temperature.

An ECU (Engine Control Unit) 1 includes a fuel injection control unit 10 and an ignition timing control unit 11. The fuel injection control unit 10 outputs, on the basis of signals (process values) obtained by detecting by each of the above-described sensors, injection signals Qupper and Qlower to each injection valve 8a, 8b on the upstream and downstream sides. Each of these injection signals is a pulse signal having pulse width responsive to the injection quantity, and each inj ection valve 8a, 8b is opened by time corresponding to this pulse width to inject the fuel. The ignition timing control unit 11 controls ignition timing of an ignition plug 26.

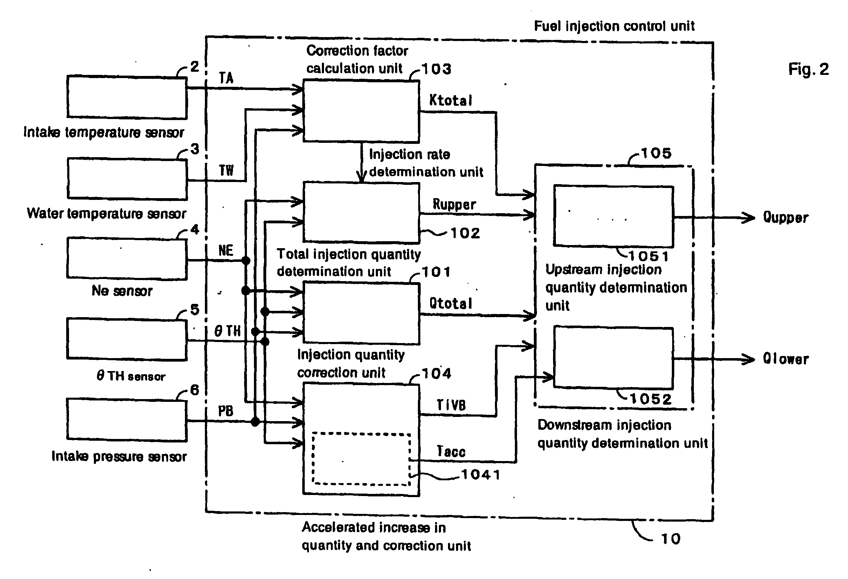

Fig. 2 is a functional block diagram for the fuel injection control unit 10, and the same symbols as in the foregoing represent the same or equal portions.

A total injection quantity determination unit 101 determines a total quantity Qtotal of fuel to be injected from each fuel injection valve 8a, 8b on the upstream and downstream sides on the basis of the engine speed NE, the throttle opening θTH and intake pressure PB. An injection rate determination unit 102 refers to an injection rate table on the basis of the engine speed NE and throttle opening θTH to determine an injection rate Rupper of the upstream injection valve 8a. An injection rate Rlower of the downstream injection valve 8b is determined as (1 - Rupper).

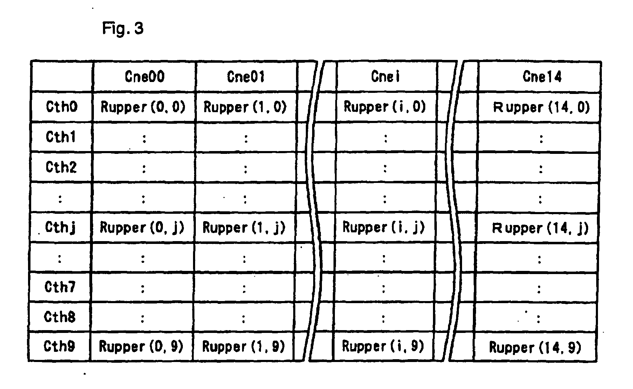

Fig. 3 is a view showing an example of the injection rate table, and in the present embodiment, an injection rate map is constituted with 15 items (Cne00 to Cne14) as a reference as the engine speed NE, and with 10 items (Cth0 to Cth9) as a reference as the throttle opening 6TH, and the injection rate Rupper of the upstream injection valve 8a is registered in advance at each combination of each engine speed NE and the throttle opening θTH. The injection rate determination unit 102 determines an inj ection rate Rupper corresponding to the engine speed NE and the throttle opening θTH that have been detected, by means of the four-point interpolation on the injection rate map.

Reverting to Fig. 2, a correction factor calculation unit 103 calculates a manifold air pressure correction factor Kpb, an intake temperature correction factor Kta and cooling water temperature correction factor Ktw and the like on the basis of process values such as the manifold air pressure PB, the intake temperature TA and the cooling water temperature TW, and further calculates a total correction factor Ktotal by integrating these all correction factors.

An injection quantity correction unit 104 includes an accelerated increase in quantity and correction unit 1041, and during acceleration, increases and corrects the injection quantity of the downstream inj ection valve 8b for acceleration. In an injection quantity determination unit 105, an upstream injection quantity determination unit 1051 determines injection quantity Qupper of the upstream injection valve 8a on the basis of the inj ection rate Rupper and the total inj ection quantity Qtotal . A downstream inj ection quantity determination unit 1052 determines the injection quantity Qlower of the downstream injection valve 8b on the basis of theupstreaminjectionquantity Qupper and the total injection quantity Qtotal.

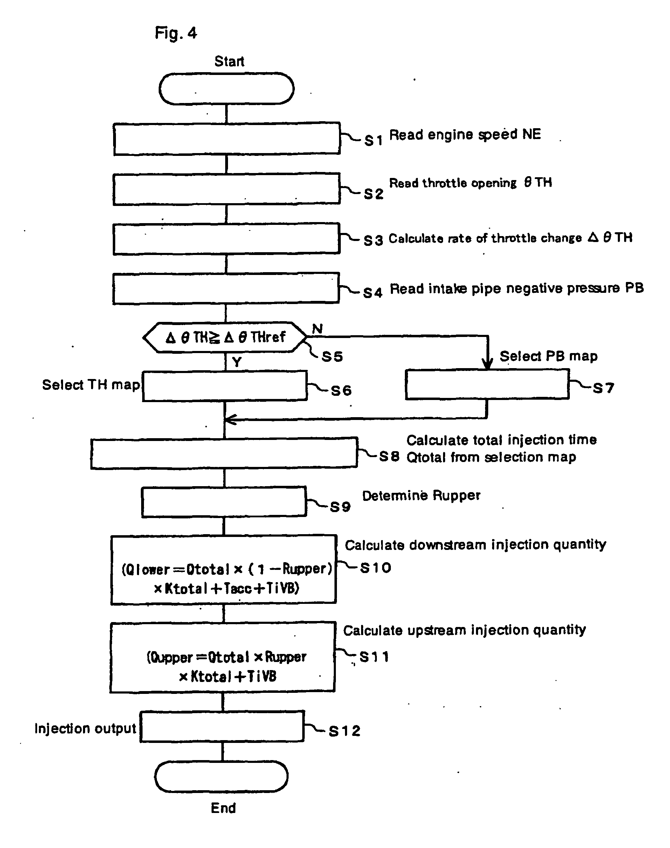

Next, with reference to a flowchart of Fig. 4, the description will be made of an operation of the fuel injection control unit 10 in detail. This handling is executed by interruption due to a crank pulse in a predetermined stage.

In a step S1, the engine speed NE is read in, and in a step S2, the throttle opening θTH is read in. In a step S3, an hour rate of change ΔθTH of the throttle opening θTH is calculated on the basis of a differential between a previous value for the throttle opening θTH obtained by detecting in the step S2 and this value. In a step S4, the manifold air pressure PB is read in. In a step S5, the hour rate of change ΔθTH of the throttle opening θTH is compared with a reference rate of change ΔθTHref.

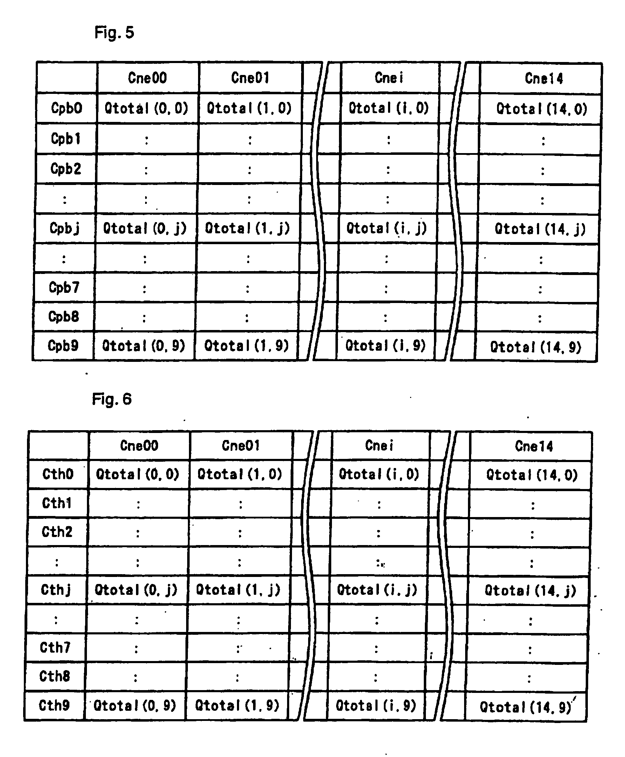

If the rate of change ΔθTH is under the reference rate of change ΔθTHref, the sequence will proceed to a step S7 because it is judged that the throttle handling is slow and the engine is in a steady state. In the step S7, the PB map is selected by the total injection quantity determination unit 101. Fig. 5 is a view showing an example of the PB map, and in the present embodiment, 15 items (Cne00 to Cne14) are defined as the engine speed NE, and 10 items (Cpb0 to Cpb9) are defined as the manifold air pressure PB, and the total injection quantity Qtotal is registered in advance at each combination of each engine speed NE and the manifold air pressure PB.

In contrast to this, if the rate of change ΔθTH exceeds the reference rate of change ΔθTHref, the sequence will proceed to a step S6 because the engine is judged to be in a transient state. In the step S6, theTHmap is selectedby the total injection quantity determination unit 101. Fig. 6 is a view showing an example of the TH map, and in the present embodiment, 15 items (Cne00 to Cne14) are defined as the engine speed NE, and 10 items (Cth0 to Cth9) are defined as the throttle opening 6TH, and the total injection quantity Qtotal is registered in advance at each combination of each engine speed NE and the throttle opening θTH.

In a step S8, the PB map 106 is retrieved on the basis of the engine speedNE and the manifold air pressure PB in response to the map selected, or the TH map 107 is retrieved on the basis of the engine speed NE and the throttle opening θTH to calculate the total injection quantity Qtotal. The total injection quantity determination unit 101 determines an injection rate Rupper responsive to the engine speed NE and the throttle opening θTH (or manifold air pressure PB) detected by means of four-point interpolation on each of the maps.

In a step S9, in the injection rate determination unit 102, the injection rate table is referred to on the basis of the engine speed NE and the throttle opening θTH, to determine the injection rate Rupper of the upstream injection valve 8a.

In a step S10, the injection quantity Qlower of the downstream inj ection valve is calculated by adding, to a product of the total injection quantity Qtotal, the downstream injection rate (1 - Rupper) and a total correction factor Ktotal obtained by calculating by the correction factor calculation unit 103, a predetermined accelerated increase quantity value Tacc further obtained by calculating by the accelerated increase in quantity and correction unit 1041 and invalid injection time TiVB. The acceleration corrected quantity Tacc is calculated as a function of the rate of change of the throttle opening θTH and the manifold air pressure PB. The invalid injection time TiVB is time during which of the injection-valve opening time, perfect injection of fuel is not accompanied with, and is determined by type and structure of the fuel injection valve.

In a step S11, the injection quantity Qupper of theupstream injection valve is calculated by adding, to a product of the total injection quantity Qtotal, the upstream injection rate Rupper and a total correction factor Ktotal obtained by calculating by the correction factor calculation unit 103, further invalid injection time TiVB. In a step S12, a driving signal responsive to the upstream injection quantity Qupper and the downstream injection quantity Qlower is supplied to the upstream fuel injection valve 8a and the downstream fuel injection valve 8b. Each fuel injection valve 8a, 8b is opened by time corresponding to the upper injection quantity Qupper and the downstream injection quantity Qlower to inject the fuel.

According to the present invention, since fuel the quantity of which has been increased by the accelerated increase in quantity and correction is all injected from the downstream fuel injection valve, no response lag occurs in the injection of the fuel for the accelerated increase in quantity and correction. Accordingly, the response in the accelerated increase in quantity and correction can be improved.

Problem to be Solved: In an international combustion engine in which fuel inj ection valves are arranged upstream from and downstream from the throttle valve respectively, the response of the accelerated increase in quantity and correction will be improved.

solution: The total injection quantity determination unit 101 determines a total quantity Qtotal of fuel to be injected from each fuel injection valve 8a, 8b on the upstream and downstream sides. The injection rate determination unit 102 determines an injection rate Rupper of the upstream injection valve 8a. The correction factor calculation unit 103 calculates a total correction factor Ktotal. The injection quantity correction unit 104 includes an accelerated increase in quantity and correction unit 1041, and during acceleration, increases and corrects only injection quantity of the downstream injection valve 8b for acceleration. The inj ection quantity determination unit 105 determines injection quantity Qupper of the upstream injection valve 8a on the basis of the injection rate Rupper and the total injection quantity Qtotal, and determines injection quantity Qlower of the downstream injection valve 8b on the basis of the upstream injection quantity Qupper and the total injection quantity Qtotal.

## Claims

1. An internal combustion engine (20) having a fuel injection control system,
said internal combustion engine (20) including an intake pipe equipped with a throttle valve (28), an upstream fuel injection valve (8a) provided upstream from said throttle valve (28), and a downstream fuel injection valve (8b) provided downstream from said throttle valve (28), said fuel injection control system comprising:
means (101, 102, 105) for controlling a fuel injection quantity (Qupper, Qlower) of each of said fuel injection valves (8a, 8b) on the basis of plural parameters including throttle opening (θTH) and engine speed (NE), and
means (104) for detecting an accelerated driving state to increase and correct the fuel injection quantity (Qlower) of the downstream fuel injection valve (8b),
**characterized in that**
the fuel injection control system further comprises
a TH map in which a total fuel injection quantity (Qtotal) to be injected from both fuel injection valves (8a, 8b) has been registered with the engine speed (NE) and the throttle opening (θTH) as parameters, and
a PB map in which the total fuel injection quantity (Qtotal) has been registered with the engine speed (NE) and a manifold air pressure (PB) as parameters,
wherein the PB map or the TH map is selected on the basis of a rate of change (ΔθTH) of the throttle opening (θTH);
wherein said total fuel injection quantity (Qtotal) is determined on the basis of said TH map or said PB map, and
wherein said means (104) for increasing and correcting the fuel injection quantity (Qlower) of the downstream fuel injection valve (8b) is adapted to increase the fuel injection quantity (Qlower) of the downstream fuel injection valve (8b) by an accelerated increase quantity value (Tacc) calculated as a function of the rate of change of the throttle opening (θTH) and the manifold air pressure (PB).

## Patentansprüche

1. Verbrennungsmotor (20) mit einem Kraftstoffeinspritzsteuer-/regelsystem,
wobei der Verbrennungsmotor (20) ein Saugrohr umfasst, welches mit einem Drosselventil (28) ausgestattet ist, ein stromaufwärtiges Kraftstoffeinspritzventil (8a) umfasst, welches stromaufwärts von dem Drosselventil (28) vorgesehen ist, und ein stromabwärtiges Kraftstoffeinspritzventil (8b) umfasst, welches stromabwärts von dem Drosselventil (28) vorgesehen ist, wobei das Kraftstoffeinspritzsteuer-/regelsystem umfasst:
ein Mittel (101, 102, 105) zum Steuern/Regeln einer Kraftstoffeinspritzmenge (Qupper, Qlower) von jedem von den Kraftstoffeinspritzventilen (8a, 8b) auf der Basis einer Mehrzahl von Parametern einschließlich einer Drosselöffnung (θTH) und einer Motordrehzahl (NE); und
ein Mittel (104) zum Erfassen eines beschleunigten Antriebszustands, um die Kraftstoffeinspritzmenge (Qlower) von dem stromabwärtigen Kraftstoffeinspritzventil (8b) zu erhöhen und zu korrigieren,
**dadurch gekennzeichnet, dass**
das Kraftstoffeinspritzsteuer-/regelsystem ferner umfasst
ein TH-Kennfeld, in welchem eine Gesamtkraftstoffeinspritzmenge (Qtotal), welche von beiden Kraftstoffeinspritzventilen (8a, 8b) einzuspritzen ist, mit der Motordrehzahl (NE) und der Drosselöffnung (θTH) als Parametern registriert wurde, und
ein PB-Kennfeld, in welchem die Gesamtkraftstoffeinspritzmenge (Qtotal) mit der Motordrehzahl (NE) und einem Krümmerluftdruck (PB) als Parametern registriert wurde;
wobei das PB-Kennfeld oder das TH-Kennfeld auf der Basis einer Änderungsrate (ΔθTH) von der Drosselöffnung (θTH) ausgewählt wird;
wobei die Gesamtkraftstoffeinspritzmenge (Qtotal) auf der Basis von dem TH-Kennfeld oder dem PB-Kennfeld bestimmt wird, und
wobei das Mittel (104) zum Erhöhen und Korrigieren der Kraftstoffeinspritzmenge (Qlower) von dem stromabwärtigen Kraftstoffeinspritzventil (8b) dazu ausgebildet ist, die Kraftstoffeinspritzmenge (Qlower) von dem stromabwärtigen Kraftstoffeinspritzventil (8b) durch einen Beschleunigter-Erhöhungsbetrag-Wert (Tacc) zu erhöhen, welcher als eine Funktion der Änderungsrate von der Drosselöffnung (θTH) und des Krümmerluftdrucks (PB) berechnet wird.

## Revendications

1. Moteur à combustion interne (20) ayant un système de commande d'injection de carburant,
ledit moteur à combustion interne (20) comprenant un tuyau d'admission équipé d'un papillon des gaz (28), une soupape d'injection de carburant en amont (8a) prévue en amont dudit papillon des gaz (28) et une soupape d'injection de carburant en aval (8b) prévue en aval dudit papillon des gaz (28), ledit système de commande d'injection de carburant comprenant :
des moyens (101, 102, 105) pour commander une quantité d'injection de carburant (Qupper, Qlower) de chacune desdites soupapes d'injection de carburant (8a, 8b) en fonction de plusieurs paramètres comprenant l'ouverture du papillon des gaz (θTH) et la vitesse du moteur (NE), et
des moyens (104) pour détecter un état d'entraînement accéléré afin d'augmenter et de corriger la quantité d'injection de carburant (Qlower) de la soupape d'injection de carburant en aval (8b),
**caractérisé en ce que**:
le système de commande d'injection de carburant comprend en outre :
une carte TH dans laquelle une quantité d'injection de carburant totale (Qtotal) à injecter par les deux soupapes d'injection de carburant (8a, 8b) a été enregistrée avec la vitesse du moteur (NE) et l'ouverture du papillon des gaz (θTH) en tant que paramètres, et
une carte PB dans laquelle la quantité d'injection de carburant totale (Qtotal) a été enregistrée avec la vitesse du moteur (NE) et une pression d'air d'admission (PB) en tant que paramètres,
dans lequel la carte PB ou la carte TH est sélectionnée en fonction d'un taux de changement (ΔθTH) de l'ouverture du papillon des gaz (θTH) ;
dans lequel ladite quantité d'injection de carburant totale (Qtotal) est déterminée en fonction de ladite carte TH ou de ladite carte PB, et
dans lequel lesdits moyens (104) pour augmenter et corriger la quantité d'injection de carburant (Qlower) de la soupape d'injection de carburant en aval (8b) sont adaptés pour augmenter la quantité d'injection de carburant (Qlower) de la soupape d'injection de carburant en aval (8b) d'une valeur de quantité d'augmentation accélérée (Tacc) calculée en fonction du taux de changement de l'ouverture du papillon des gaz (θTH) et de la pression d'air d'admission (PB).
